# EUROPEAN PATENT APPLICATION

(11) **EP 1 816 360 A1**
(43) Date of publication of application: **08.08.2007**
(21) Application number: 06002229.0
(22) Date of filing: 03.02.2006
(51) Int. Cl.: F16C 23/08, F16C 35/077

(54) **Self-adjusting radial bearing with co-moulded plastic sliding surface**

(71) Applicant: Aktiebolaget SKF, 415 50 Göteborg (SE)
(72) Inventor: Pairone, Gianfranco, 10141 Torino (IT); Bragie' Damiano, 13843 Pettinengo (Biella) (IT)
(74) Representative: Lotti, Giorgio

(57) **Abstract**

*Rigid radial bearing* (*1*') *with four points of contact presenting a rotation axis (A), and provided with an inner rotating race (2) which may be engaged by* a *rotating body (22) around the axis (A), and provided with a fixed outer race which is co-axial to the rotating race (2), and with a ball joint (7) which is suitable for permitting* a *bending of the rotating body (22) along the axis A; the ball* joint *(7) being in turn provided with a convex spherical surface (4) which is obtained radially to the outside of the outer race (3) and with an annular metallic* portion *(8) which is co-axial to the outer race and which defines* a *circumferential gap (9) with the outer race (3) itself: a portion of plastic material (11) being co-moulded inside the circumferential gap (9) and presenting a concave spherical surface (6) which is complementary to and coupled with the said convex spherical surface (4).*

## Description

The present invention refers to a rigid radial bearing with four points of contact.

Rigid radial bearings of a well-known kind such as, for example, the one which is illustrated in the schematic diagram which is indicated with "Well-known Art", also have advantageous applications in gear boxes 20 for vehicles, inside which they are mounted on the end 21 of a continuous thread screw 22, and comprise an inner rotating race 2 which is engaged by the continuous thread screw 22 itself, and an outer metallic race 3, which is co-axial to the race 2, and which is radially delimited towards the outside by a convex spherical surface 4.

Rigid radial bearings of the kind which have just been described above present a rotation axis A and also comprise a further outer metallic race 5, which is interposed between the race 3 and the box 20, and which is radially delimited towards the inside by a concave spherical surface 6 which is complementary to the convex spherical surface 4 and which is engaged by the race 3 itself in order to substantially create a ball joint 7 which is ssuitable for permitting the bending of the continuous thread screw 22.

As rigid radial bearings which are provided with the relative outer race 5, or rather which are already provided with the ball joint 7, need special working and treatment in relation to the two spherical surfaces, as well as a special assembly cycle, the cost of both these details influences the end cost of the product in a considerable fashion, making it more expensive to produce.

The aim of the present invention is to produce a rigid radial bearing with four points of contact which will be both simple and cost-effective to produce.

According to the present invention, a rigid radial bearing with four points of contact will be produced, presenting a rotation axis, and comprising an inner rotating race which may be engaged by a rotating body which rotates around its own axis, an outer metallic race which is co-axial to the rotating race, and a ball joint which is suitable for permitting a bending of the rotating body along the axis, and comrprising a convex spherical surface which is obtained radially outside the outer metallic race; the rigid radial bearing being characterised by the fact that the said ball joint comprises an annular metallic portion which is arranged co-axial to the outer metallic race and which defines a circumferential gap with the outer race, and a portion of plastic material which is co-moulded inside the said circumferential gap and which presents a concave spherical surface which is complementary to and coupled with the said convex spherical surface.

The present invention will now be described with reference to the attached drawings, which illustrate a non-limiting form of embodiment of the present invention, and in which:
- FIGURE 1 illustrates, in axial section and in schematic form, a first preferred form of embodiment of the rigid radial bearing which is the subject of the present invention;
- FIGURE 2 illustrates, in axial section, a second preferred form of embodiment of the rigid radial bearing which is shown in FIGURE 1; and
- FIGURE 3 illustrates, in axial section and on an enlarged scale, a third preferred form of embodiment of the rigid radial bearing which is shown in FIGURE 1.

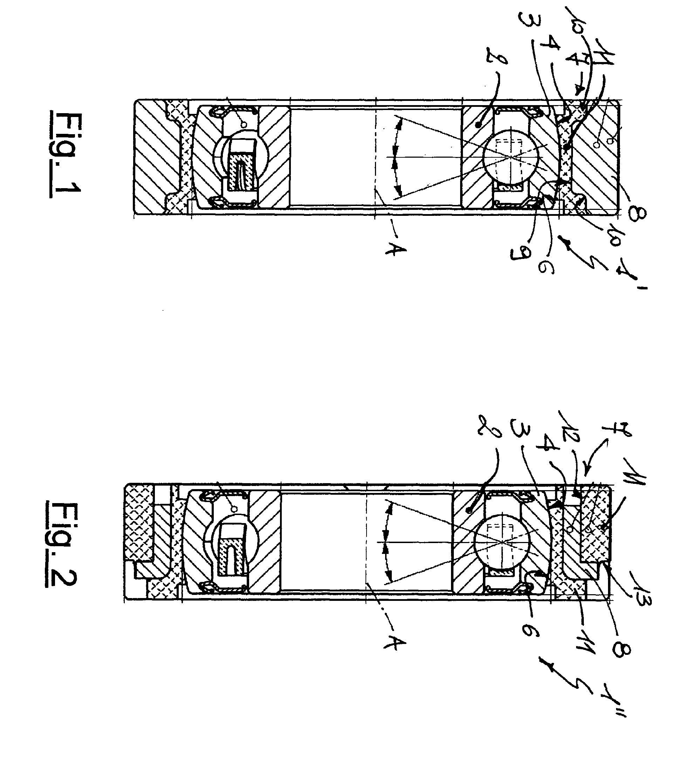

Making initial reference to FIGURE 1, and using the same reference numbers to indicate the same or similar parts which have already been described in the introduction hereto, the number 1' indicates a rigid radial bearing 20 in its entirety.

The bearing 1' presents a rotation axis A, and comprises an inner rotating race 2 which may be engaged by the end 21 of a continuous thread screw 22, a metallic outer race 3 which is co-axial to the race 2, and a ball joint 7 which is suitable for permitting the bending of the screw 22 along the axis A.

The joint 7 comprises a convex spherical surface 4 which is obtained radially outside the race 3 and an annular metallic portion 8, which is arranged co-axial to the race 3, and which defines a circumferential gap 9 with the race 3 itself.

The joint 7 also comprises two outer annular housings 10, which are open on a respective side L of the metallic portion 8, and which are obtained inside the gap 9 by means of deep, fast turning.

According to a form of embodiment which is not illustrated, the joint 7 may also present only one of the two annular housings 10 in order to endow the bearing 1' with mechanical characteristics which are different to those in the configuration with two housings 10.

In the preferred form of embodiment which is shown in FIGURE 1, the joint 7 comprises, finally, a portion of plastic material 11, which is co-moulded with the race 3 and the metallic portion 8 both inside the gap 9 and inside the housings 10,and which presents a concave spherical surface 6 which is complementary to and coupled with the convex spherical surface 4.

The co-mooulding of the portion of plastic material 11 permits the rapid production of the spherical surface 6, as well as, obviously, the immediate and precise coupling of the spherical surface 6 itself with the spherical surface 4, which, in addition, does not need any special surface working.

The portion of plastic material 11 presents a composition which has a high content of fibre glass, or rather a fibre glass content of between 40% and 60%, in such a way as to guarantee adeguate resistance during the disassembly of the parts, as well as to avoid any fragility in the portion 11 itself.

The form of embodiment which is illustrated in FIGURE 2 relates to a rigid radial bearing 1", which differs from the bearing 1' due to the fact that the portion of plastic material 11 is also co-moulded to the outside of the gap 9, or rather it is also co-moulded radially to the outside of the metallic portion 8, which, in this form of embodiment, is defined by a shaped metallic insert which is substantially embedded inside the portion 11 itself.

In particular, the metallic portion 8 presents an L shape in a transverse section and passing by the axis A, while the portion 11 presents, on one side, an annular opening 12, and, on the other side, 4 slits 13 which are suitable, together with the annular opening 12 itself, for permitting the control of the relative position between the metallic portion 8 and the race 3 during the co-moulding of the portion 11 itself.

In the form of embodiment which is illustrated in FIGURE 2, the metallic portion 8 presents a thickness which is less than a thickness of the portion 11, but, according to a form of embodiment which is not illustrated but which is easily understandable from the examples which are herein described and illustrated, the metallic portion 8 may present a thickness which is substantially equal to a thickness of the portion 11, permitting, in this case, the elimination of the annular opening 12 and the slits 13.

The bearing 1" presents the same construction advantages as the bearing 1', but its mechanical and dynamimc behaviour differs from the mechanical and dynamic behaviour of the bearing 1' itself.

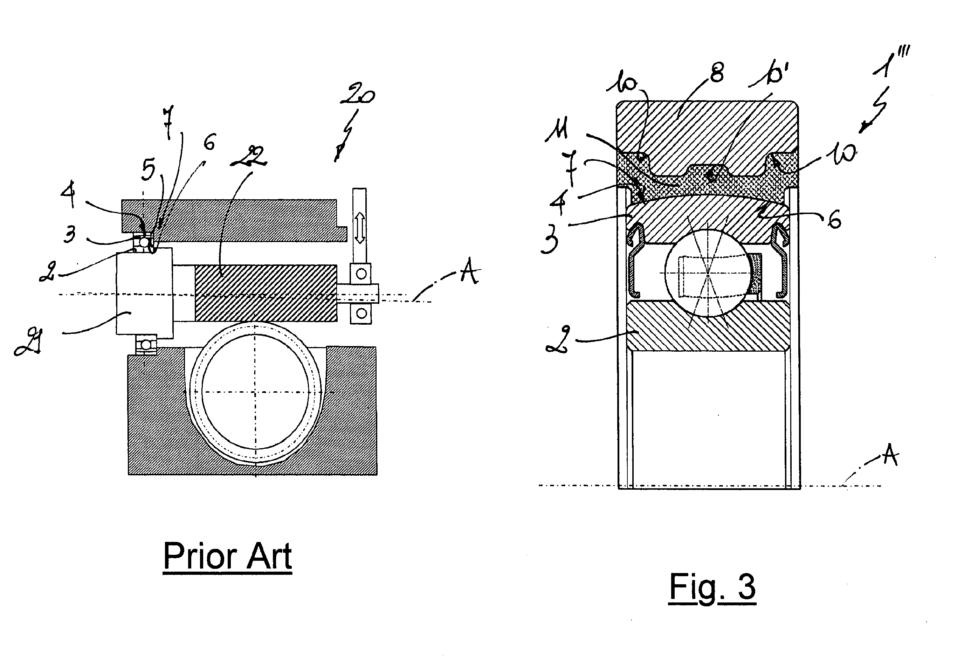

The form of embodiment which is illustrated in FIGURE 3 is relative to a rigid radial bearing 1"' which is similar to the bearing 1', from which the bearing 1"' differs due to the fact that the joint 7 comprises, in addition, an annular groove 10', which is obtained inside the race 3 from the side of the gap 9, and which is arranged in an intermediate position between the two housings 10. The groove 10' presents a radial depth which is less than a radial depth of the housings 10, and is filled by the plastic material of the portion 11 during the co-moulding in order to further reduce any stress of the portion 11 itself.

It is intended that the present invention should not be limited to the forms of embodiment which are herein described and illustrated, which are to be considered as examples of forms of embodiment of the rigid radial bearing with four points of contact and which may be, instead, subject to further modifications relating to the shape and disposition of its parts, as well as to details pertaining to construction and assembly.

## Claims

1. Rigid radial bearing with four points of contact (1')(1")(1"') presenting a rotation axis (A), and comprising an inner rotating race (2) which may be engaged by a rotating body (22) around the axis (A) itself, an outer metallic race (3) which is co-axial to the rotating race (2), and a ball joint (7) which is suitable for permitting a bending of the rotating body (22) along the axis (A), and comprising a convex spherical surface (4) which is obtained radially outside the outer metallic race (3); the rigid radial bearing (1')(1")(1"') being **characterised by** the fact that the said ball joint (7) comprises an annular metallic portion (8) which is arranged co-axial to the outer metallic race (3) and which defines a circumferential gap (9) with the outer race (3), and a portion of plastic material (11) which is co-moulded inside the said circumferential gap (9) and which presents a concave spherical surface (6) which is complementary to and coupled with the said convex spherical surface (4).

2. Rigid radial bearing according to Claim 1, **characterised by** the fact that the said portion of plastic material (11) presents a composition which has a high fibre glass content.

3. Rigid radial bearing according to Claims 1 or 2, **characterised by** the fact that the said metallic portion (8) comprises at least one annular housing (10) which is open on a side of the metallic portion (8) itself, and which is obtained inside the said gap (9) by means of deep, fast turning; the annular housing (10) being filled by the portion of plastic material (11).

4. Rigid radial bearing according to Claim 3, **characterised by** the fact that the said metallic portion (8) comprises two annular housings each of which is open on a respective side of the metallic portion (8) itself, and obtained inside the said gap (9) by means of deep, fast turning; the annular housings both being filled by the portion of plastic material (11).

5. Rigid radial bearing according to Claim 4, **characterised by** the fact that the said metallic portion (8) comprises an annular groove (10') which is open towards the said gap (9), and which is arranged in a substantially intermediate position between the said annular housings (10); the groove (10') being filled by the portion of plastic material (11).

6. Rigid radial bearing according to Claim 5, **characterised by** the fact that the said groove (10') presents a radial depth which is less than a radial depth of the said two annular housings (10).

7. Rigid radial bearing according to Claims 1 or 2, **characterised by** the fact that the said portion of plastic material (11) is also co-moulded to the outside of the said gap (9); the metallic portion (8) being defined by a shaped insert which is substantially embedded inside the portion of plastic material (11).
